# EUROPEAN PATENT SPECIFICATION

(11) **EP 1 381 299 B1**
(45) Date of publication and mention of the grant of the patent: **13.06.2007**
(21) Application number: 02716951.5
(22) Date of filing: 22.04.2002
(51) Int. Cl.: A47J 27/21

(54) **ELECTRIC HEATERS**
ELEKTRISCHE HEIZELEMENTE
RADIATEURS ELECTRIQUES

(30) Priority: 23.04.2001 GB 0109950
(43) Date of publication of application: 21.01.2004
(73) Proprietor: STRIX LIMITED, Isle of Man IM9 2RG (GB)
(72) Inventor: JOHNSTON, Simon, Richard, Isle of Man IM9 5LQ (GB)
(74) Representative: Samuels, Adrian James
(86) International application number: PCT/GB2002/001886
(87) International publication number: WO 2002/085169

(56) References cited:
- GB-A- 2 346 738
- US-A- 2 857 502
- US-A- 6 153 859

## Description

This invention relates to electric heaters, particularly those for liquid heating vessels and to ways of detecting when the liquid has boiled.

In the field of electric liquid heating vessels such as water boiling kettles and jugs, it has now become standard to provide a steam switch incorporating a snap-acting or creep-acting bimetallic actuator in order to switch the appliance off when the water has boiled. There are two standard configurations. In the first configuration, the steam switch is located at the top of the vessel, usually somewhere near the top of the handle. This requires either a mechanical or electrical link to the control which is located in the base of the vessel. This arrangement is most common in water boiling jugs.

Alternatively, the steam switch may be located in the base, either separately or integrated with a control unit. In such arrangements, a steam pipe is necessary to convey steam from the space above the water at the top of the vessel down to the bimetallic actuator. Both of these arrangements have their disadvantages. In particular, they both limit the freedom of design of the vessel.

There have been several proposals for detecting boiling electronically, although so far as we know, only one commercially available product to date has used such an approach and this still required an electrical connection to the handle. The approach is generally considered to be prohibitively expensive and has only been proposed for use with thick film heaters.

It is proposed,in our earlier PCT application WO 97/04694, which is also published as US-B-6 153 859, to form a sump having a relatively small volume in the centre of the base plate of a planar heating element which can detect boiling by sensing a sharp rise in temperature consequent upon vigorous convection associated with boiling. The sump in this document is incorporated into an air pot rather than a more conventional European water boiling kettle or jug. As a result, the element used has a relatively low power - namely 700 Watts.

The Applicant has now recognised that it may be difficult to successfully apply the arrangement of WO 97/04694 to such European-style kettles and jugs where the heating element tend to be rated at significantly higher powers such as 2.2 kW or even 3 kW since heating of the sump by the element could tend to mask the temperature rise of the water when it boils. There remains, therefore, a need to provide an improved arrangement for boil detection.

When viewed from a first aspect the present invention provides an electric heater for a liquid heating vessel comprising a generally planar substrate, an elongate heating element comprising terminations at respective ends for making electrical connection thereto, the heating element being mounted to or formed on said substrate such that said terminations are spaced apart on the substrate, the heater further comprising a sump having a relatively small volume formed in the substrate between said terminations.

When viewed from a second aspect the present invention provides a liquid heating vessel including an electric heater comprising a generally planar substrate and an elongate heating element comprising terminations at respective ends for making electrical connection thereto, mounted to or formed on said substrate such that said terminations are spaced apart on the substrate, said heater further comprising a sump having a relatively small volume, in comparison to the liquid heating vessel as a whole, formed in the substrate between said terminations.

Thus it will be seen by those skilled in the art that in accordance with the invention, a sump is placed between the heater terminations (known in the art as "cold tails"). Since this area of the heater is unheated, its temperature will be influenced to a lesser degree by the element, thereby allowing it more closely to reflect the temperature of the water in the sump. This allows the jump in temperature upon the rapid convection associated with boiling to be detected more reliably. Furthermore, there will be reduced convection in the bulk of the liquid in such an unheated area which tends to discourage premature mixing between the bulk liquid and that in the sump i.e. until the former begins to boil.

By providing boil protection as part of the heater assembly itself, which is not based on steam detection, there is a much greater freedom to design the vessel into which it will be incorporated since there is no need to provide steam tubes, mechanical or electrical links etc.

The heating element is preferably arranged to extend in an arc around the heater. Although arrangements may be envisaged whereby the heater continues e.g. radially inwardly, preferably the whole length of the element is arranged in an arc, preferably substantially at the periphery of the heater. Accordingly in such arrangements, the sump is arranged substantially on the same arc i.e. preferably substantially at the periphery of the heater.

The terminations may be separated just sufficiently to accommodate the sump and also to allow electrical connection to be made thereto, but may equally be separated by a significantly greater amount. In one preferred embodiment for example, the heating element extends around approximately 180° of the periphery of the heater. In this arrangement the sump is preferably provided on the same arc. In this and other embodiments, the sump is preferably located midway between the two terminations.

Means will be required for sensing when the temperature of the sump rises as a result of the rapid convection brought about by boiling. Suitable electronic sensing means such as a thermostat and associated electronic circuitry could be employed, but preferably a mechanical actuator is used. One potential form that such an actuator could take would be a suitable shape-memory alloy, but preferably a bimetallic actuator, most preferably a snap-acting bimetallic actuator, is used. In a particularly preferred embodiment, the snap-acting bimetallic actuator is provided by a standard steam switch module, for example the Applicant's R48 steam switch. This is particularly convenient since it allows existing parts to be used, thereby significantly saving on cost. In a potential variant, a steam switch provided integrally with a control unit such as the Applicant's U18 control may be used.

Where a separate steam switch module is used, it may be mounted completely separately from a control unit for the heater, but alternatively a separate steam switch is mounted on a common mounting plate with a control unit. For example, the mounting plate for a standard control unit may be extended to accommodate the steam switch.

As mentioned above, the invention is particularly beneficial when used in conjunction with relatively high power heaters and preferably therefore the heating element is rated at at least 1 kW, most preferably at least 2 kW.

The actuator is preferably arranged to open a set of electrical contacts when liquid boiling in the vessel is sensed. These contacts may simply be arranged in series with the electrical supply to the heating element so that the electrical supply is interrupted upon boiling to de-energise the heater. Alternatively, the contacts may be part of an arrangement to energise, or maintain solely energised, a simmer or keep-warm element once liquid in the vessel has boiled. This may be a separate element or may indeed be the same heating element operated at a lower power.

In a preferred embodiment, the actuator is arranged to trip an over-centre mechanism which maintains the reduction or interruption in power to the heating element until such time as it is reset by a user. Most preferably, this is the over-centre trip arrangement of a separate steam switch module, e.g. the Applicant's R48. Preferably, a reset lever is provided to allow a user to reset the steam switch's over-centre mechanism. In the most preferred embodiment, the steam switch module reset lever is coupled to the trip lever of a control unit such as the Applicant's U18 series control so that the reset lever is able to reset both the steam switch and the control unit proper if either should operate.

The heating element may be mounted to or formed on the substrate directly. More preferably however a thermally conductive heat distribution plate is provided between the two to enhance the even distribution of heat across the heater. Preferably a cut-out is provided in the heat distribution plate to prevent excessive transfer of heat to the sump. The edge of the heat distribution plate is preferably at least 6mm from the sump, preferably at least 10mm and most preferably at least 14mm.

The Applicant has further appreciated that a similar effect to that achieved by locating the sump between the cold tails and providing a cut-out in the heat distribution plates or the like, where such a plate is provided, may be achieved by locating the sump on an area of the substrate which is not covered by a heat distribution plate. The sump will not, in general, be between the cold tails since these would normally be located above such a heat distribution plate.

By virtue of the arrangement set out above, conduction of heat from the element to the sump is minimised, thereby allowing the sump temperature to be a truer reflection of the temperature of the liquid inside it. In common with the earlier aspects of the invention, as well as limiting thermal conduction between the heating element and the sump, it is also important for successful operation of the sump that the liquid therein does not convect significantly until such time as the bulk of the liquid in the vessel begins to boil. By locating the sump in a relatively cooler area of the heater, this object is assisted since there will be reduced convection in the liquid above such areas of the heater during the heating process.

In a preferred arrangement, the heating element is arranged around the periphery of the heat distribution plate, these two preferably being substantially circular. The sump is therefore arranged radially outwardly of the heating element and thus outside the footprint of the heat distribution plate.

Preferably the sump is arranged substantially at the periphery of the substrate with the heating element and heat distribution plate being arranged towards the centre thereof. This gives a maximum separation between the sump and the heat distribution plate whilst still allowing relatively isotropic heating.

The optimum separation between the sump and the heat distribution plate will depend upon a number of factors, including the thickness and thermal conductivity of the substrate and the power of the heating element. Preferably however the separation is greater than 6 mm, more preferably greater than 10 mm and ideally at least 14 mm. The thermal conductivity of the substrate is preferably less than 100 Watts per metre per Kelvin (Wm⁻¹K⁻¹), more preferably less than 50 Wm⁻¹K⁻¹ and most preferably approximately 25 Wm⁻¹K⁻¹.

More generally the Applicant has now appreciated that optimum heating of the liquid in the sump - that is to say ensuring that temperature sensed externally of the sump is not unduly influenced by the heating element - whilst minimising the total area of the heater, may be achieved by judicious control of the relative thermal conductivities of the substrate immediately surrounding the sump in comparison to that of the bulk of the heater i.e. that part covered with a heat distribution plate. In particular it has been found that successful operation of the sump in detecting boil may be achieved by arranging the sump in a cut-out in the heat distribution plate wherein the thermal conductivity of the material surrounding the sump is less than 20% of the thermal conductivity of the part of the plate covered by heat distribution plate.

As mentioned above, by arranging the ratio of thermal conductivities to be less than 20%, heat transfer from the element to the liquid being heated may be maximised whilst minimising the space necessary to accommodate the sump with a sufficient degree of thermal isolation to prevent premature operation thereof.

For successful operation, the ratio should be less than 20%, more preferably less than 10% and more preferably still, approximately 5% or less.

The relative difference in thermal conductivities is preferably achieved by providing a cut-out in a heat distribution plate so that the first thermal conductivity is that of the substrate alone, whilst the second thermal conductivity is essentially that of the heat distribution plate (the effect of the substrate being negligible in comparison to the effect of the heat distribution plate in such circumstances).

The sump may be the same material and the same thickness as the substrate *per se.* Preferably however at least the walls of the sump are thinner than the substrate, preferably less than half the thickness. This further enhances the thermal isolation of the sump from direct influence by the heating element without increasing the overall area of the heater.

Such arrangements may equally be used on thick film heaters as to those in which a sheathed element is mounted to or formed on the substrate.

The requirement to ensure sufficient thermal isolation of the sump from the heating means to prevent excessive heating of the liquid therein may be expressed in terms of heat flow. In the case of water, the requirement may be expressed as a maximum temperature rise of approximately 40°C to be experienced by the water in the sump prior to the jump in temperature associated with boiling. Temperature rises significantly higher than this will cause premature operation of the thermal sensor e.g. bimetallic actuator and thus will prevent the proper detection of boiling.

Equivalently, the heater should preferably be arranged such that the amount of heat transferred to the liquid in the sump during heating of the bulk of the liquid should be less than approximately 170 Joules per cubic centimetre of volume in the sump. The total heat flow to the sump will depend not only on the power of the element and the degree of thermal isolation, but also on the time taken for the water to heat to boiling. The maximum such time (and therefore the maximum or 'worst case' heat flow) will occur when the vessel is filled to its maximum. Thus for a given liquid heating vessel, the maximum desirable heat flow to the sump will be predetermined.

The sump may be formed separately and attached to the substrate by any suitable means such as laser or TIG welding. Alternatively, a separately formed sump may be attached by brazing. In a preferred example of such a method the sump is brazed onto the substrate in the same brazing operation as for the heat distribution plate and/or heating element.

Alternatively and preferably the sump is formed by deep drawing of the substrate. This has the advantage that the deep drawing process naturally causes thinning of the side walls.

As mentioned above, mixing between the liquid in the sump and the bulk liquid is minimised by locating the sump in a relatively unheated area of the heater substrate and/or thermally isolating it from the heating element. In order further to enhance this object, the sump is preferably dimensioned so as to inhibit convection therein. The Applicant has realised that this may be achieved by choosing suitable dimensions and proportions for the sump. In particular, it has been found that the sump should have a depth which is at least as great or greater than its diameter. Preferably said depth is at least 5 mm, more preferably at least 10 mm and most preferably approximately 12 mm. The diameter is preferably at least 5 mm, more preferably at least 10 mm and most preferably approximately 11 mm.

It has been found that the angle of the side walls of the sump is also important and particularly that the steeper the sides, the greater the extent to which convection within the sump is inhibited. Thus, it is preferred that the walls of sump are inclined at an angle of at least 45°, more preferably at least 75° and most preferably approximately 90°, i.e. vertical. Angles greater than 90° are not preferred since the resulting undercut could result in manufacturing difficulties.

The sump may be of any cross-sectional shape but is preferably circular.

The material of the substrate is preferably stainless steel, more preferably 300 or 400 series stainless steel and most preferably 304, 316 or 430 series stainless steel.

Certain preferred embodiments of the present invention will now be described, by way of example, with reference to the accompanying drawings in which:
Fig. 1a is a perspective view of a heater in accordance with the first embodiment of the invention;
Fig. 1b is a view similar to Fig. 1a but showing a control unit and steam switch mounted to the heater;
Fig. 1c is an enlarged scrap section showing the sump in greater detail; and
Figs. 2a and 2b to Figs. 4a and 4b are corresponding views of second to fourth embodiments of the invention respectively.

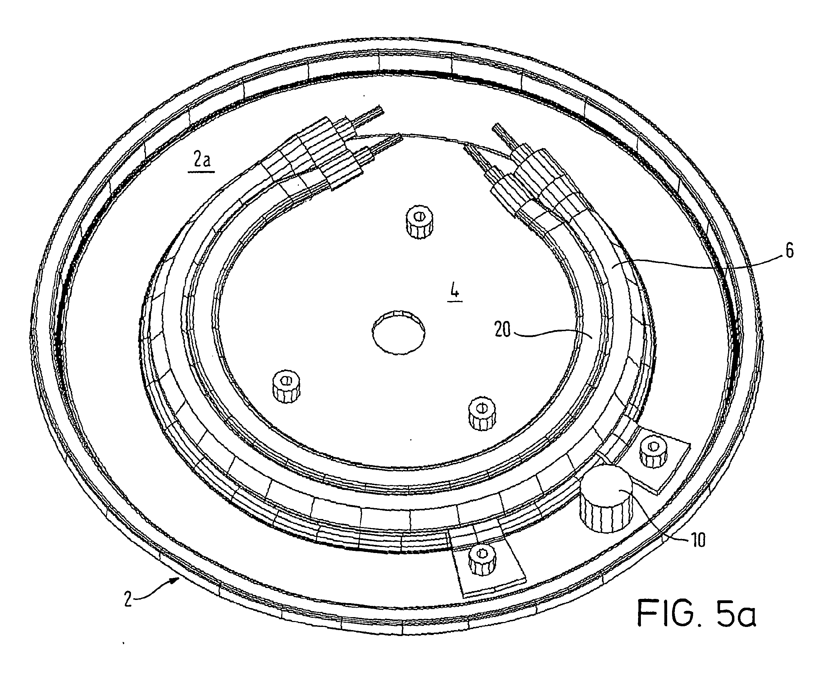

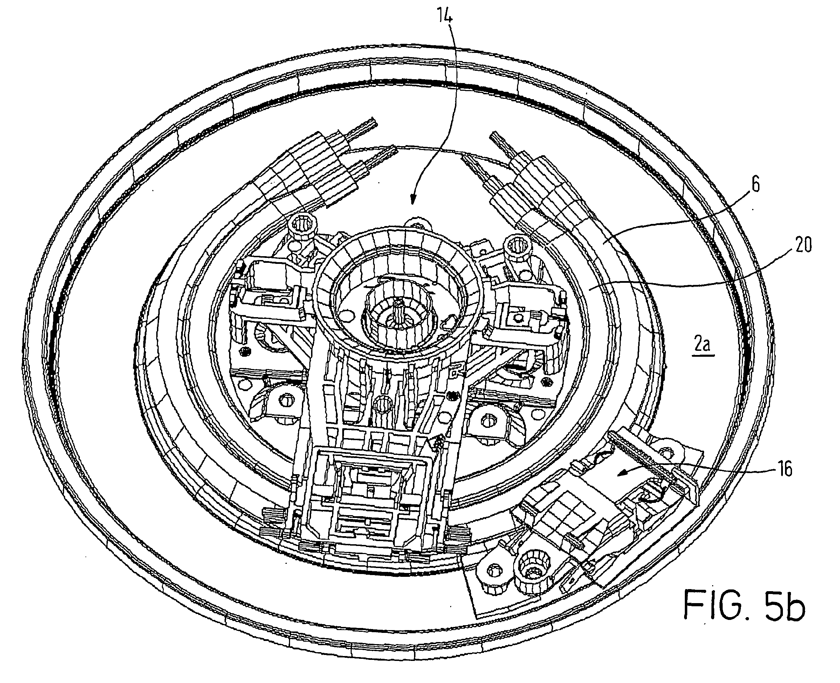

The embodiments in Fig. 5a and 5b are not part of the invention.

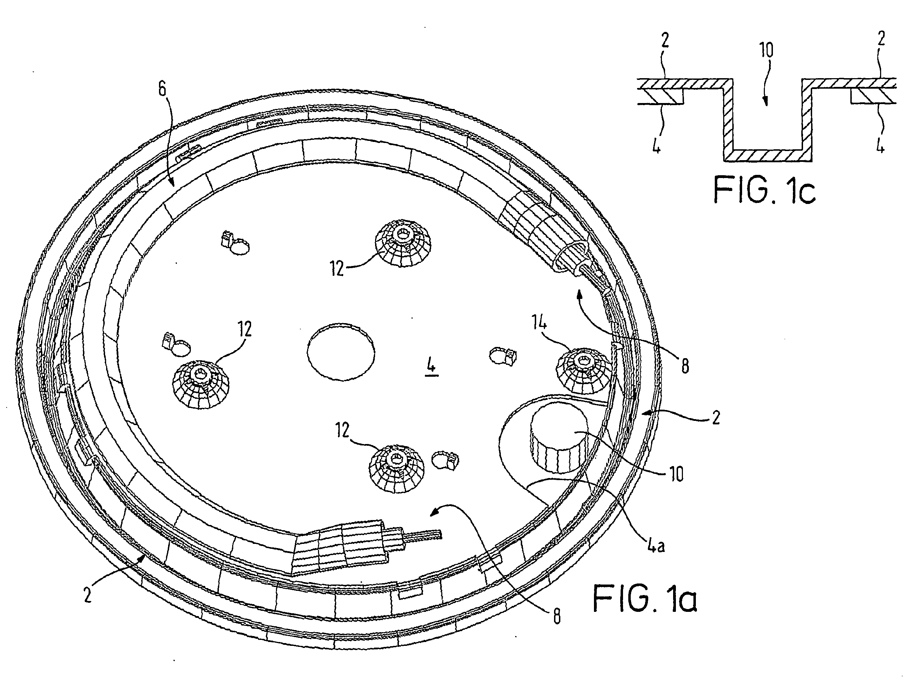

Turning now to Fig. 1a, there may be seen an electric heater for a liquid heating vessel which embodies the present invention. The heater comprises a heater substrate 2 made of 300 series stainless steel 0.9 mm thick which has a thermal conductivity of 25 Wm⁻¹K⁻¹. Other grades of stainless steel may be used such as 400 series. A thickness in the range 0.5 to 0.9 mm is preferred. The edge of the heater substrate 2 is formed with a raised lip and downwardly depending channel to form a sealing fit with a plastics heating vessel. Further details of this arrangement may be found in WO 96/18331.

An aluminium heat distribution plate 4 is bonded onto the dry face of the heater substrate covering substantially the whole of this face. A sheathed heating element 6 having a nominal power rating of 2.2 kW is brazed onto the aluminium plate 4 around the periphery thereof as is well known in the art. At either end of the heating element 6 are low resistance terminations 8 for making electrical connection to the heating element, better known as cold tails.

Between the cold tails 8, on the same arc as the heating element 6, there is provided a sump 10 formed in the substrate 2. The sump 10 is pre-formed by deep-drawing a flat stainless steel plate and is brazed onto a pre-formed aperture in the substrate in the same brazing operation as is used to attach the element 8. Alternatively, the substrate 2 could be deep drawn to form the sump 10.

The sump 10 may be seen more clearly in the enlarged scrap section of Figure 1c. It will be seen that the sump is circular with an inside diameter of 11 mm and an inside depth of 12 mm. It may further be seen that a cut-away 4a is formed in the heat distribution plate around the sump 10. The cut-away 4a is sufficiently big that there is a gap of at least 6 mm between the heat distribution plate 4 and sump 10 all the way round.

The substrate 2 is 0.9mm thick and has a thermal conductivity of 25 Wm⁻¹K⁻¹ (Watts per metre per Kelvin). The heat distribution plate 4 is 2mm thick and has a conductivity of 210 Wm⁻¹K⁻¹. Thus the relative efficiency of thermal transfer through the zone of substrate 4a surrounding the sump 10 compared to that through the heat distribution plate 4, is 0.9 x 25 / 2.0 x 210 = 5.4%.

A series of mounting bosses 12 are formed on the heat distribution plate 4 for mounting a control unit and a steam switch module thereto.

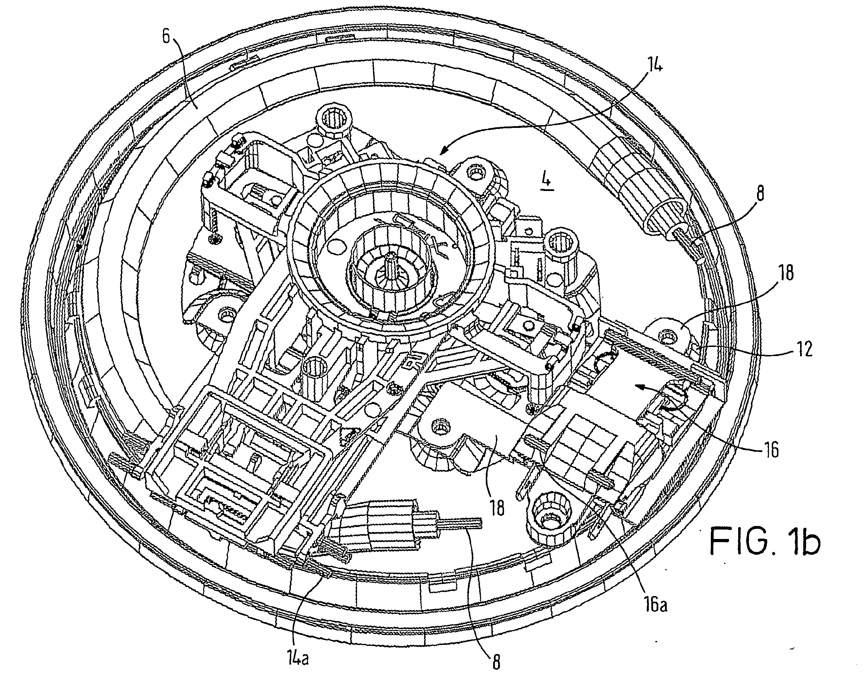

Figure 1b is a view of the heater of Fig 1a with a control unit 14 and a steam switch 16 mounted to it. The control unit 14 is the applicant's commercially available U1830 control, the basic principles of which are described in WO 95/34187 to which further reference should be made for fuller details. The steam switch module 16 is the applicant's standard R48 steam switch module which incorporates a snap-acting bimetallic actuator (not visible) which acts on an over-centre switch mechanism to open a pair of electrical contacts. The steam switch module 16 is mounted with its bimetallic actuator in good thermal contact with the underside of the sump 10. It is mounted by means of a mounting bracket 18 which is bolted to two of the mounting bosses 12 formed on the heat distribution plate 4, sharing one of these with the control unit 14.

Electrical interconnection is provided by suitably heat resistant wires as is known in the art, but these have been omitted for clarity. The steam switch 16 is connected electrically in series between the line output of the control unit 16 (not shown) and one of the cold tails 8 of the heating element 6.

Also omitted for clarity is a trip lever which is attached to a coupling point 16a of the steam switch and is able to operate in an upward direction (as viewed from Fig. 16) on a similar coupling point 14a on the U1830 trip lever.

In operation, a liquid heating vessel fitted with the heater shown in Figures 1a and 1b is filled with water which of course means that the sump 10 becomes filled with water. When the heater 6 is energised, it will begin to heat the water in the vessel. In view of the relatively small area of the mouth of the sump 10 in comparison with the area of the heater as a whole, there will be relatively poor mixing between the water in the sump 10 and that in the main body of the vessel. Accordingly, the temperature of the liquid in the sump 10 will lag between the temperature of the water being heated in the vessel. Furthermore, since the sump 10 is located between the cold tails 8, i.e. on an area of the substrate which is not heated, and since conduction of heating element 6 can only occur by means of the relatively poorly conducting substrate 2 (because of the cutaway in 4a in the heat distribution plate) the effects of direct heating of the sump 10 by the heating element 6 is relatively marginal. The result of this is that the temperature at the base of the sump 10 that is sent by the bimetallic actuator of the steam switch 16 is much lower than that sensed by the two bimetallic actuators forming part of the control unit 14 which are in thermal contact with the heat distribution plate 4.

However, once the bulk of the liquid in the vessel begins to boil, it will convect vigorously which induces a much more thorough mixing of the water in the main body of the vessel with that in the sump 10. This means that the relatively cooler water in the sump 10 will suddenly be replaced with water from the main body of the vessel which will be at or near boiling point. This sudden increase in the temperature of the water in the sump 10 takes the temperature in the sump above the operating temperature of the bimetal in the steam switch 16, thus causing it to snap to its opposite curvature, trip the over-centre switch mechanism and thus open the electrical contacts, interrupting the power supply to the heating element 6. In order to restore power to the element 6, a user must operate a trip lever protruding from the vessel in order to reset the over-centre mechanism of the steam switch 16.

Assuming that the heater is installed in a vessel having a maximum capacity of 1.7 litres and that the vessel is filled to capacity with water initially at 20°C, the flow of energy into the sump directly from the heater may be estimated. Consequently the temperature rise of the liquid in the sump may be estimated. In the present example it has been calculated that approximately 190 Joules of energy will flow into the sump, meaning that the temperature of the water therein will rise to 60°C whilst the bulk of the liquid approaches boiling. This ensures that premature actuation of the bimetal will not occur.

In the event that the heater is energised without any liquid in it, the temperature of the heat distribution plate 4 will rise rapidly until one or both of the bimetal actuators of the control unit 14 operates to trip the trip lever thereof, thereby interrupting the electrical supply to the heating element 6. Power may be restored by the user manually operating the same trip lever as is used to reset the steam switch 16.

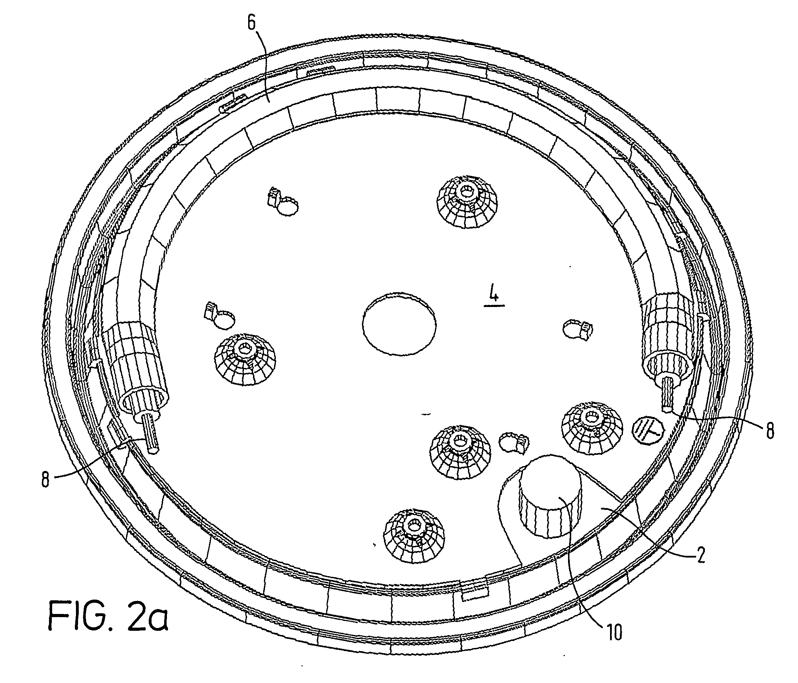

Turning now to Figure 2a, there may be seen a second embodiment of the invention. Features of this embodiment in common with the first are denoted by like reference numerals. The difference between this embodiment and that shown in Figs. 1a and 1b is that in this embodiment the heating element 6 extends around only approximately 180° of the periphery of the heat distribution plate 4. In this embodiment, the sump 10 is not located midway between the cold tails 8 but rather is closer to one of them. However, it is no closer to either cold tail 8 than in the previous embodiment.

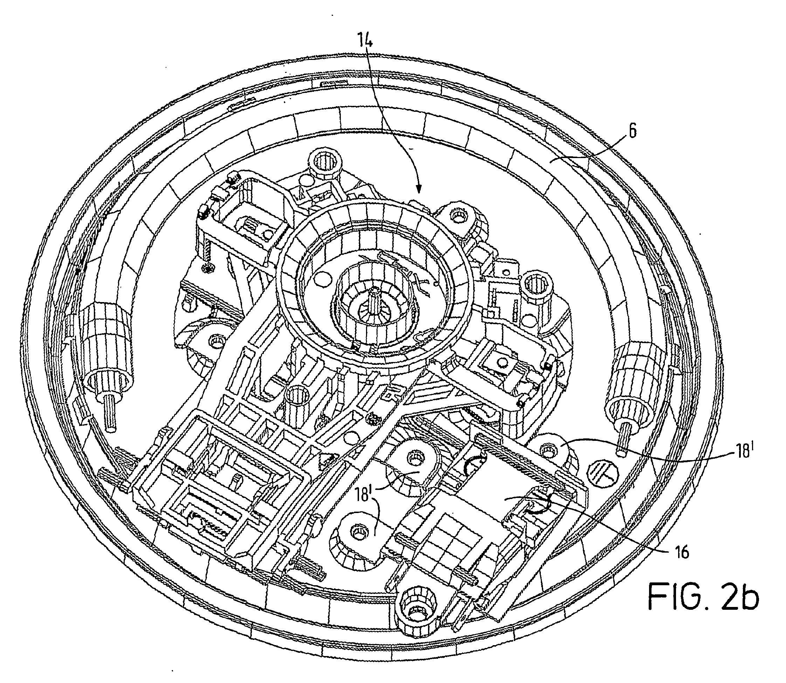

Some further minor differences may be noted by considering the view in Fig. 2b which shows the control unit 14 and steam switch 16 mounted to the heat distribution plate 4 and sump 10 respectively. Firstly it may be seen that the control unit 14 and steam switch 16 may now be oriented to be substantially parallel to one another, thereby facilitating the provision of a single operating lever protruding from the vessel in use. It may also be seen that the steam switch 16 is not mounted on a separate bracket as in the previous embodiment, but rather it is mounted on an extension of the mounting bracket 18' of the control unit 14. Operation of this embodiment is exactly the same as the previous one and will not, therefore, be described again.

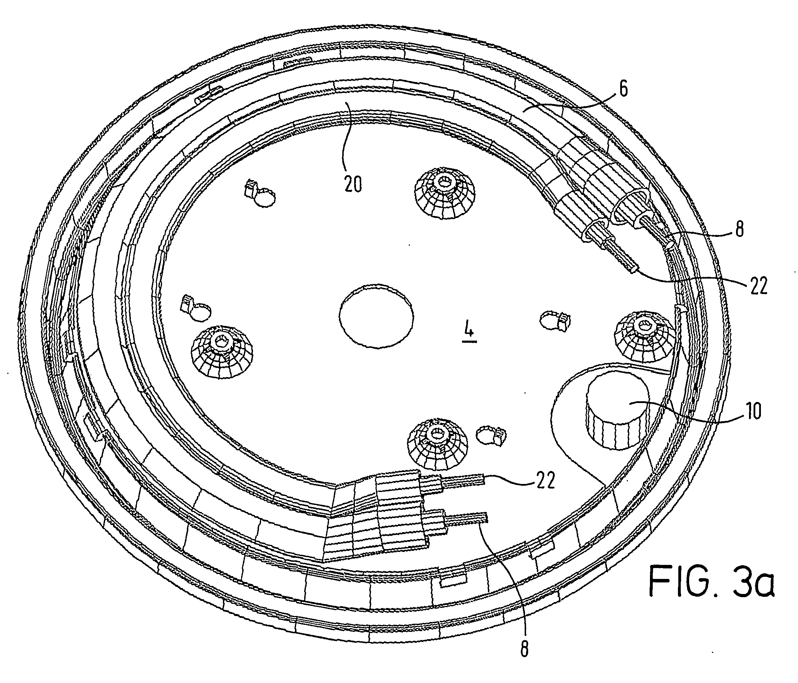

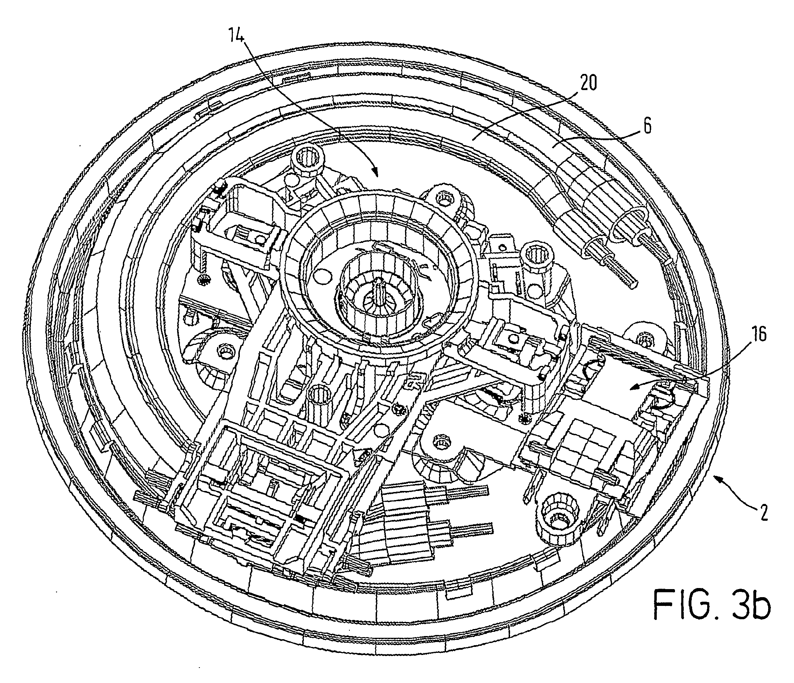

Figures 3a and 3b show a third embodiment of the invention. This embodiment is substantially similar to the first except that a second heating element 20 is provided inwardly of the first heating element 6. The nominal power rating of the first element 6 is 2400 watts, whilst that of the second element 20 is 200 watts. The two elements 6, 20 are connected electrically in parallel so that during normal heating operation their combined power output is 2600 watts. However, the steam switch 16 in this embodiment interrupts power only to the first element 6, thereby leaving the second element 20 energised. This means that upon boiling of water in the vessel, the water continues to be heated at a relatively low 200 watts in order to keep it warm. The control unit 14 however is connected electrically in series with both of the heating elements 6, 20 so that in the event the heater is switched on dry or boils dry, power to both elements 6, 20 will be interrupted.

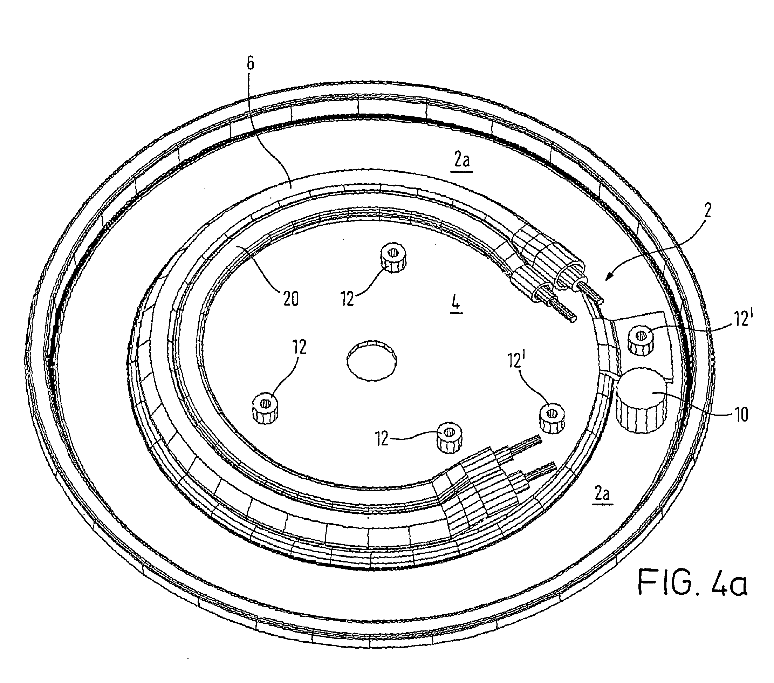

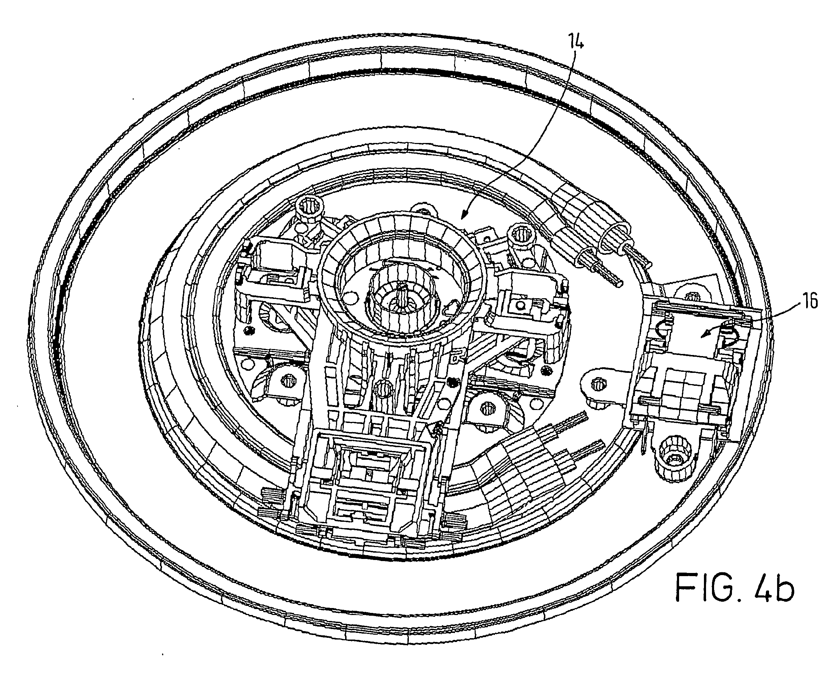

Figs. 4a and 4b show a fourth embodiment of the invention. It will be seen in this embodiment that the substrate 2 extends beyond the heat distribution plate 4 thus forming an unheated rim 2a. It is in this unheated rim 2a that the sump 10 is provided. It will therefore be seen that the sump 10 is provided outside of the footprint of the heat distribution plate 4. The relatively poor thermal conductivity of the stainless steel substrate 2 ensures that there is relatively little direct heating of the sump 10 by the heating element 6, 20. Furthermore, convection of the bulk of the water in the vessel during normal heating will be confined generally to the area in the centre in the heater within the footprint of the heat distribution plate 4. It may be seen from Fig. 4b, that in this embodiment the steam switch 16 is entirely separate from the control unit 14 and is mounted on its own mounting bosses 12'. The electrical connections in this embodiment are the same as those in the previously described embodiment so that upon boiling, the keep-warm element 20 remains energised.

Finally, Figs 5a and 5b show a fifth embodiment which is not part of the invention which differs from the fourth embodiment in that the sump 10 is no longer located in the vicinity of the cold tails 8, 22, but rather is mounted further round the element 6, 20 but still outside the footprint of the heat distribution plate 4. The electrical connection and operation of this embodiment is identical to that of the third and fourth embodiment.

It will be appreciated by those skilled in the art that many variations or modifications may be made to the described embodiments within the scope of the present invention. In particular, any particular combination of element lengths, element powers, double or single elements and sump locations is envisaged within the scope of the present invention. Moreover the sump may be provided with thinner walls than the substrate and could be located outside the footprint of a heat distribution plate.

Furthermore the invention is not restricted to use with heaters having a sheathed heating element bonded to a substrate. For example in accordance with several aspects of the invention the heater may be a thick film heater.

## Claims

1. An electric heater for a liquid heating vessel comprising a generally planar substrate (2), an elongate heating element (6) comprising terminations (8) at respective ends for making electrical connection thereto, the heating element (6) being mounted to or formed on said substrate (2) such that said terminations (8) are spaced apart on the substrate (2), **characterised in that** the heater further comprises a sump (10) having a relatively small volume formed in the substrate (2) between said terminations (8).

2. A liquid heating vessel including an electric heater comprising a generally planar substrate (2) and an elongate heating element (6) comprising terminations (8) at respective ends for making electrical connection thereto, mounted to or formed on said substrate (2) such that said terminations (8) are spaced apart on the substrate 2), **characterised in that** said heater further comprises a sump (10) having a relatively small volume, in comparison to the liquid heating vessel as a whole, formed in the substrate (2) between said terminations (8).

3. A heater or liquid heating vessel as claimed in claim 1 or 2 wherein the heating element (6) is arranged to extend in an arc around the heater.

4. A heater or liquid heating vessel as claimed in claim 3 wherein the whole length of the element (6) is arranged in an arc.

5. A heater or liquid heating vessel as claimed in claim 3 or 4 wherein said element (6) is arranged substantially at the periphery of the heater.

6. A heater or liquid heating vessel as claimed in any of claims 3 to 5 wherein the heating element (6) extends around approximately 180° of the periphery of the heater.

7. A heater or liquid heating vessel as claimed in claim 6 wherein the sump (10) is provided on substantially the same arc as the heating element (6).

8. A heater or liquid heating vessel as claimed in any preceding claim wherein the sump (10) is located midway between the two terminations (8).

9. A heater or liquid heating vessel as claimed in any preceding claim comprising a mechanical actuator for sensing when the temperature of the sump (10) rises as a result of boiling.

10. A heater or liquid heating vessel as claimed in claim 9 wherein said actuator comprises a bimetallic actuator, preferably a snap-acting bimetallic actuator.

11. A heater or liquid heating vessel as claimed in claim 10 wherein the snap-acting bimetallic actuator is provided by a standard steam switch module (16).

12. A heater or liquid heating vessel as claimed in claim 11 comprising a control unit (14), wherein said steam switch module (16) is mounted on a common mounting plate with said control unit (14).

13. A heater or liquid heating vessel as claimed in any of claims 9 to 12 wherein the actuator is arranged to open a set of electrical contacts when liquid boiling in the vessel is sensed.

14. A heater or liquid heating vessel as claimed in claim 13 wherein said contacts are arranged in series with the electrical supply to the heating element (6) so that the electrical supply is interrupted upon boiling to de-energise the heater.

15. A heater or liquid heating vessel as claimed in claim 13 or 14 wherein said contacts are part of an arrangement to energise, or maintain solely energised, a simmer or keep-warm element (20) once liquid in the vessel has boiled.

16. A heater or liquid heating vessel as claimed in claim 13, 14 or 15 wherein the actuator is arranged to trip an over-centre mechanism which maintains the reduction or interruption in power to the heating element (6) until such time as it is reset by a user.

17. A heater or liquid heating vessel as claimed in claim 16 comprising a reset lever to allow a user to reset the over-centre mechanism.

18. A heater or liquid heating vessel as claimed in claim 17 wherein the reset lever is coupled to a trip lever of a control unit so that the reset lever is able to reset both the steam switch (16) and the control unit (14) proper if either should operate.

19. A heater or liquid heating vessel as claimed in any preceding claim comprising a thermally conductive heat distribution plate (4) between the heating element (6) and the substrate (2).

20. A heater or liquid heating vessel as claimed in claim 19 comprising a cut-out (4a) in the heat distribution plate (4).

21. A heater or liquid heating vessel as claimed in claim 20 wherein the edge of the heat distribution plate (4) is at least 6mm from the sump (10).

22. A heater or liquid heating vessel as claimed in any of claims 19 to 21 wherein the heating element (6) is arranged around the periphery of the heat distribution plate (4).

23. A heater or vessel as claimed in any preceding claim wherein said sump (10) comprises at least one side wall which is thinner than said substrate.

24. A heater or vessel as claimed in any preceding claim wherein said sump (10) has a depth which is at least as great or greater than its diameter.

25. A heater or vessel as claimed in any preceding claim wherein the walls of said sump (10) are inclined at an angle of at least 45°, more preferably at least 75° and most preferably approximately 90°, i.e. vertical.

## Patentansprüche

1. Elektrische Heizeinrichtung für einen Flüssigkeitsheizkessel, umfassend ein im Allgemeinen ebenes Substrat (2), ein längliches Heizelement (6), umfassend Abschlüsse (8) bei jeweiligen Enden zur Herstellung einer elektrischen Verbindung mit diesen, wobei das Heizelement (6) an dem Substrat (2) angebracht oder ausgebildet ist, und zwar derart, dass die Abschlüsse (8) an dem Substrat (2) mit Abstand voneinander angeordnet sind, **dadurch gekennzeichnet, dass** das Heizgerät ferner eine Sammelmulde (10) mit einem verhältnismäßig kleinen Volumen umfasst, welche in dem Substrat (2) zwischen den Abschlüssen (8) ausgebildet ist.

2. Flüssigkeitsheizkessel, umfassend ein elektrisches Heizgerät mit einem im Wesentlichen ebenen Substrat (2) und einem länglichen Heizelement (6), umfassend Abschlüsse (8) an jeweiligen Enden zur Herstellung einer elektrischen Verbindung damit, welches an dem Substrat (2) angebracht oder daran ausgebildet ist und zwar derart, dass die Abschlüsse (8) an dem Substrat (2) mit Abstand voneinander vorgesehen sind, **dadurch gekennzeichnet, dass** das Heizgerät ferner eine Sammelmulde (10) mit einem im Verhältnis zum gesamten Flüssigkeitsheizkessel verhältnismäßig kleinen Volumen umfasst, welche in dem Substrat (2) zwischen den Abschlüssen (8) ausgebildet ist.

3. Heizgerät oder Flüssigkeitsheizkessel nach Anspruch 1 oder 2, bei welchem das Heizelement (6) derart angeordnet ist, dass es in einem Bogen um das Heizgerät herum verläuft.

4. Heizgerät oder Flüssigkeitsheizkessel nach Anspruch 3, bei welchem die gesamte Länge des Elements (6) in einem Bogen angeordnet ist.

5. Heizgerät oder Flüssigkeitsheizkessel nach Anspruch 3 oder 4, bei welchem das Element (6) im Wesentlichen am Umfang des Heizgeräts angeordnet ist.

6. Heizgerät oder Flüssigkeitsheizkessel nach einem der Ansprüche 3 bis 5, bei welchem das Heizelement (6) um näherungsweise 180 Grad des Umfangs des Heizgeräts herum verläuft.

7. Heizgerät oder Flüssigkeitsheizkessel nach Anspruch 6, bei welchem die Sammelmulde (10) an im Wesentlichen dem gleichen Bogen wie das Heizelement (6) vorgesehen ist.

8. Heizgerät oder Flüssigkeitsheizkessel nach einem der vorhergehenden Ansprüche, bei welchem die Sammelmulde (10) in der Mitte zwischen den zwei Abschlüssen (8) angeordnet ist.

9. Heizgerät oder Flüssigkeitsheizkessel nach einem der vorhergehenden Ansprüche, umfassend einen mechanischen Aktuator zur Erfassung, wann die Temperatur der Sammelmulde (10) als Folge eines Kochens ansteigt.

10. Heizgerät oder Flüssigkeitsheizkessel nach Anspruch 9, bei welchem der Aktuator einen bimetallischen Aktuator umfasst, vorzugsweise einen bimetallischen Aktuator mit Schnappwirkung.

11. Heizgerät oder Flüssigkeitsheizkessel nach Anspruch 10, bei welchem der Bimetallaktuator mit Schnappwirkung durch ein Standard-Dampfschaltmodul (16) bereitgestellt ist.

12. Heizgerät oder Flüssigkeitsheizkessel nach Anspruch 11, umfassend eine Steuer/Regeleinheit (14), wobei das Dampfschaltmodul (16) an einer gemeinsamen Anbringungsplatte mit der Steuer/Regeleinheit (14) angebracht ist.

13. Heizgerät oder Flüssigkeitsheizkessel nach einem der Ansprüche 9 bis 12, bei welchem der Aktuator derart angeordnet ist, dass er einen Satz von elektrischen Kontakten öffnet, wenn erfasst wird, dass Flüssigkeit in dem Kessel kocht.

14. Heizgerät oder Flüssigkeitsheizkessel nach Anspruch 13, bei welchem die Kontakte in Reihe mit der Stromzufuhr zu dem Heizelement (6) angeordnet sind, sodass die Stromzufuhr beim Kochen unterbrochen wird, um das Heizgerät abzuschalten.

15. Heizgerät oder Flüssigkeitsheizkessel nach Anspruch 13 oder 14, bei welchem die Kontakte Teil einer Anordnung zur Stromversorgung eines Köchel- oder Warmhalteelements (20) sind, oder nur für dieses die Stromversorgung aufrechterhalten, sobald Flüssigkeit in dem Kessel gekocht hat.

16. Heizgerät oder Flüssigkeitsheizkessel nach Anspruch 13, 14 oder 15, bei welchem der Aktuator derart angeordnet ist, dass er einen Sprungmechanismus auslöst, welcher die Verringerung oder Unterbrechung von Energie zu dem Heizelement (6) bis zu einer Zeit hält, zu welcher durch einen Nutzer zurückgesetzt wird.

17. Heizgerät oder Flüssigkeitsheizkessel nach Anspruch 16, umfassend einen Rücksetzhebel, um einem Nutzer zu gestatten, den Sprungmechanismus zurückzusetzen.

18. Heizgerät oder Flüssigkeitsheizkessel nach Anspruch 17, bei welchem der Rücksetzhebel mit einem Auslösehebel einer Steuer/Regeleinheit derart gekoppelt ist, dass der Rücksetzhebel in der Lage ist, sowohl den Dampfschalter (16) als auch die Steuer/Regeleinheit (14) korrekt zurückzusetzen, falls eine von beiden in Betrieb sein sollte.

19. Heizgerät oder Flüssigkeitsheizkessel nach einem der vorhergehenden Ansprüche, umfassend eine thermisch leitfähige Wärmeverteilungsplatte (4) zwischen dem Heizelement (6) und dem Substrat (2).

20. Heizgerät oder Flüssigkeitsheizkessel nach Anspruch 19, umfassend einen Ausschnitt (4a) in der Wärmeverteilungsplatte (4).

21. Heizgerät oder Flüssigkeitsheizkessel nach Anspruch 20, wobei der Rand der Wärmeverteilungsplatte (4) wenigstens 6 mm von der Sammelmulde (10) entfernt ist.

22. Heizgerät oder Flüssigkeitsheizkessel nach einem der Ansprüche 19 bis 21, bei welchem das Heizelement (6) um den Umfang der Wärmeverteilungsplatte (4) herum angeordnet ist.

23. Heizgerät oder Kessel nach einem der vorhergehenden Ansprüche, bei welchem die Sammelmulde (10) wenigstens eine Seitenwand umfasst, welche dünner als das Substrat ist.

24. Heizgerät oder Kessel nach einem der vorhergehenden Ansprüche, bei welchem die Sammelmulde (10) eine Tiefe aufweist, welche wenigstens so groß wie oder größer als ihr Durchmesser ist.

25. Heizgerät oder Kessel nach einem der vorhergehenden Ansprüche, bei welchem die Wände der Sammelmulde (10) mit einem Winkel von wenigstens 45 Grad, vorzugsweise wenigstens 75 Grad und besonders bevorzugt ca. 90 Grad, d.h. vertikal geneigt sind.

## Revendications

1. Elément chauffant électrique pour un récipient de chauffage de liquide comprenant un substrat généralement planaire (2), un élément de chauffage allongé (6) comprenant des terminaisons (8) à des extrémités respectives pour effectuer une connexion électrique à celles-ci, l'élément de chauffage (6) étant monté ou formé sur ledit substrat (2) afin que lesdites terminaisons (8) soient écartées sur le substrat (2), **caractérisé en ce que** l'élément chauffant comprend en outre un puits (10) ayant un volume relativement petit formé dans le substrat (2) entre lesdites terminaisons (8).

2. Récipient de chauffage de liquide comprenant un élément chauffant électrique comprenant un substrat généralement planaire (2) et un élément cde chauffage allongé (6) comprenant des terminaisons (8) à des extrémités respectives pour faire une connexion électrique à celles-ci, monté ou formé sur ledit substrat (2) afin que lesdites terminaisons (8) soient écartées sur le substrat (2), **caractérisé en ce que** l'élément chauffant comprend en outre un puits (10) ayant un volume relativement petit comparé au récipient de chauffage de liquide dans son intégralité, formé dans le substrat (2) entre lesdites terminaisons (8).

3. Elément chauffant ou récipient de chauffage de liquide selon la revendication 1 ou 2, dans lequel l'élément de chauffage (6) est adapté pour se prolonger selon un arc autour de l'élément chauffant.

4. Elément chauffant ou récipient de chauffage de liquide selon la revendication 3, dans lequel toute la longueur de l'élément (6) est agencée selon un arc.

5. Elément chauffant ou récipient de chauffage de liquide selon la revendication 3 ou 4, dans lequel ledit élément (6) est agencé substantiellement à la périphérie de l'élément chauffant.

6. Elément chauffant ou récipient de chauffage de liquide selon l'une quelconque des revendications 3 à 5, dans lequel l'élément de chauffage (6) s'étend autour d'environ 180° de la périphérie de l'élément chauffant.

7. Elément chauffant ou récipient de chauffage de liquide selon la revendication 6, dans lequel le puits (10) est prévu sur substantiellement le même arc que l'élément de chauffage (6).

8. Elément chauffant ou récipient de chauffage de liquide selon l'une quelconque des revendications précédentes, dans lequel le puits (10) est localisé à égale distance entre les deux terminaisons (8).

9. Elément chauffant ou récipient de chauffage de liquide selon l'une quelconque des revendications précédentes, comprenant un actionneur mécanique pour détecter quand la température du puits (10) augmente du fait d'une ébullition.

10. Elément chauffant ou récipient de chauffage de liquide selon la revendication 9, dans lequel ledit actionneur comprend un actionneur bimétallique, de préférence un actionneur bimétallique à action instantanée.

11. Elément chauffant ou récipient de chauffage de liquide selon la revendication 10, dans lequel l'actionneur bimétallique à action instantanée est fourni par un module de commutation de vapeur normalisé (16).

12. Elément chauffant ou récipient de chauffage de liquide selon la revendication 11, comprenant une unité de commande (14), dans lequel ledit module de commutation de vapeur (16) est monté sur une plaque de montage commune avec ladite unité de commande (14).

13. Elément chauffant ou récipient de chauffage de liquide selon l'une quelconque des revendications 9 à 12, dans lequel l'actionneur est adapté pour ouvrir un jeu de contacts électriques quand l'ébullition du liquide dans le récipient est détectée.

14. Elément chauffant ou récipient de chauffage de liquide selon la revendication 13, dans lequel lesdits contacts sont agencés en série avec l'alimentation électrique de l'élément de chauffage (6) afin que l'alimentation électrique soit interrompue lors de l'ébullition pour couper l'alimentation de l'élément chauffant.

15. Elément chauffant ou récipient de chauffage de liquide selon la revendication 13 ou 14, dans lequel lesdits contacts font partie d'un ensemble pour alimenter, ou maintenir alimenté uniquement, un élément de maintien d'ébullition ou de chaleur (20) une fois que le liquide dans le récipient est entré en ébullition.

16. Elément chauffant ou récipient de chauffage de liquide selon la revendication 13, 14 ou 15, dans lequel l'actionneur est agencé pour déplacer un mécanisme décentré qui maintient la réduction ou l'interruption d'alimentation de l'élément de chauffage (6) jusqu'au moment où il est remis à la position initiale par l'utilisateur.

17. Elément chauffant ou récipient de chauffage de liquide selon la revendication 16, comprenant un levier de remise à la position initiale pour permettre à un utilisateur de remettre à la position initiale le mécanisme décentré.

18. Elément chauffant ou récipient de chauffage de liquide selon la revendication 17, dans lequel le levier de remise à la position initiale est relié à un levier de déplacement d'une unité de commande afin que le levier de remise à la position initiale puisse remettre correctement à zéro à la fois le commutateur de vapeur (16) et l'unité de commande (14) s'il faut que l'un ou l'autre fonctionne.

19. Elément chauffant ou récipient de chauffage de liquide selon l'une quelconque des revendications précédentes, comprenant une plaque de distribution de chaleur thermiquement conductrice (4) entre l'élément de chauffage (6) et le substrat (2).

20. Elément chauffant ou récipient de chauffage de liquide selon la revendication 19, comprenant une découpe (4a) dans la plaque de distribution de chaleur (4).

21. Elément chauffant ou récipient de chauffage de liquide selon la revendication 20, dans lequel le bord de la plaque de distribution de chaleur (4) est à au moins 6 mm du puits (10).

22. Elément chauffant ou récipient de chauffage de liquide selon l'une quelconque des revendications 19 à 21, dans lequel l'élément de chauffage (6) est agencé autour de la périphérie de la plaque de distribution de chaleur (4).

23. Elément chauffant ou récipient de chauffage de liquide selon l'une quelconque des revendications précédentes, dans lequel ledit puits (10) comprend au moins une paroi latérale qui est plus mince que ledit substrat.

24. Elément chauffant ou récipient de chauffage de liquide selon l'une quelconque des revendications précédentes, dans lequel ledit puits (10) a une profondeur qui est au moins aussi grande ou plus grande que son diamètre.

25. Elément chauffant ou récipient de chauffage de liquide selon l'une quelconque des revendications précédentes, dans lequel les parois dudit puits (10) sont inclinées à un angle d'au moins 45°, plus préférentiellement d'au moins 75° et plus préférentiellement d'environ 90°, en d'autres termes sont verticales.
